# EUROPEAN PATENT SPECIFICATION

(11) **EP 2 600 643 B1**
(45) Date of publication and mention of the grant of the patent: **16.03.2016**
(21) Application number: 11783057.0
(22) Date of filing: 02.06.2011
(51) Int. Cl.: H04W 4/12, H04W 48/08

(54) **METHOD, SYSTEM AND RELATED EQUIPMENT FOR TRANSMITTING SERVICE TYPE INFORMATION**
VERFAHREN, SYSTEM UND ZUGEHÖRIGES GERÄT ZUR ÜBERTRAGUNG VON DIENSTINFORMATIONEN
PROCÉDÉ, SYSTÈME ET ÉQUIPEMENT ASSOCIÉ PERMETTANT DE TRANSMETTRE DES INFORMATIONS DE TYPE DE SERVICE

(30) Priority: 24.08.2010 CN 201010264159
(43) Date of publication of application: 05.06.2013
(73) Proprietor: Huawei Technologies Co., Ltd., Longgang District Shenzhen, Guangdong 518129 (CN)
(72) Inventor: LU, Wenzhuo, Shenzhen Guangdong 518129 (CN); DU, Ruchuan, Shenzhen Guangdong 518129 (CN); LIAO, Junhua, Shenzhen Guangdong 518129 (CN)
(74) Representative: Goddar, Heinz J.
(86) International application number: PCT/CN2011/075160
(87) International publication number: WO 2011/144140

(56) References cited:
- WO-A1-2005/015825
- CN-A- 1 502 193
- CN-A- 101 047 962
- CN-A- 101 433 105
- US-A1- 2006 034 278
- US-A1- 2008 181 468
- US-B1- 6 307 836

## Description

### FIELD OF THE INVENTION

The present invention relates to the field of mobile communications technologies, and particularly, to a method, and a related device for transmitting service type information.

### BACKGROUND OF THE INVENTION

In an existing mobile communication network, a mobile station (Mobile Station, MS) may use a general packet radio service (General Packet Radio Service, GPRS) to access the Internet. An application layer packet needs to be transferred between the mobile station and a server on the Internet through a base station subsystem (Base Station Subsystem, BSS), a serving GPRS support node (Serving GPRS Supporting Node, SGSN), and a gateway GPRS support node (Gateway GPRS Support Node, GGSN). The base station subsystem includes a base station controller (BSC, Base Station Controller) and a base transceiver station (BTS, Base Transceiver Station). The SGSN needs to send current service type information of the mobile station to the base station controller, so that the base station controller performs corresponding processing according to the service type information.

A method for transmitting service type information in the prior art mainly includes: A GGSN obtains service type information of a current service of a terminal, writes the service type information into a field of an Internet Protocol (Internet Protocol, IP) packet header of the terminal, and sends the IP packet to an SGSN; the SGSN forwards the IP packet to a base station controller; and the base station controller parses the packet to obtain the service type information of the terminal.

In the prior art, the service type information that the GGSN transfers to the BSC is carried by an IP layer information element of the packet. After the BSC receives the packet sent by the GGSN, the BSC needs to restore a logical link control (Logical Link Control, LLC) layer information element in the packet; restore a sub-network dependent convergence protocol (Sub-Network Dependent Convergence Protocol, SNDCP) layer information element according to an LLC layer information element; restore the IP layer information element according to the SNDCP layer information element; and then obtain the service type information of the terminal from the IP layer information element. The foregoing restoration process is complex, so that a processing load of the BSC is heavier.

Document WO 2005/015825 A1 relates to an arrangement for allowing compensation of lost, discarded or unsent traffic on the downlink in a communication system supporting communication of packet data and classification of mobile traffic allowing application of different charging schemes for different types of traffic. It comprises a packet data node (PDN, G-PDN; GGSN; SGSN, CGSN) handling classification of traffic into different types, e.g. service class, and for applying an appropriate charging scheme depending on type. Said node provides (labels) and sends information relating to at least type, e.g. service class, to subsequent nodes (PDN, SGSN; RNC; BSC) on the downlink to a mobile station and a subsequent node (PDN; SGSN; RNC; BSC) detecting a packet loss, notes said loss and enables use of the information of the said loss together with at least type information to enable for correction of charging due to traffic loss.

Document US2006/034278 provides a solution for performing multicast within a telecommunication network. The basic idea is to introduce multicast transmission for parts of a network that is basically point-to-point oriented. This is done by creating transport multicast groups TLMG to transport data between network entities. The idea is to have a TLMG going to a node being close to the user. In one embodiment of the invention one TLMG is established between the SGSNs and RNCs and a second one between the GGSN and SGSNs. From the RNC the data is sent via a radio bearer to a user.

Document US2002/181468 concerns the dynamic reservation of resources according to the RSVP protocol for transmitting an application flow in the form of first packets between a radio terminal and a remote unit interconnected via a first IP network and a cellular radio communication system. The cellular radio communication system uses a second IP network, or even a third IP network, in its core network. According to the invention, the dynamic reservation of resources in the first IP network is completed by a second dynamic reservation of resources in the second IP network, and where necessary a third dynamic reservation of resources in the third IP network. For this, transmission elements of the cellular radio communication system perform the association between the tunnel identity used for transmitting the first packets of the application flow and the parameters assigned to each RSVP session.

### SUMMARY OF THE INVENTION

The present invention provides a method and a related device for transmitting service type information, so that the number of packet restoration times may be reduced when a base station controller obtains service type information.

An embodiment of the present invention provides a method for transmitting service type information, where the method includes:
obtaining, by a serving general packet radio service support node, SGSN, service type information,
wherein the obtaining service type information comprises:
   receiving a first downlink packet sent by a gateway general packet radio service support node, GGSN, and obtaining service type information carried in an Internet Protocol, IP, layer information element of the first downlink packet;
   writing, by the SGSN, the service type information into a base station subsystem general packet radio service protocol BSSGP layer information element or a network service layer information element of a second downlink packet; and
   sending, by the SGSN, the second downlink packet to a base station controller, where the second downlink packet carries the service type information;
wherein the writing the service type information into the BSSGP layer information element of the second downlink packet comprises:
   writing the service type information into an existing information element of the BSSGP layer of the second downlink packet.

An embodiment of the present invention further provides a serving general packet radio service support node SGSN, including:
a first obtaining unit, configured to obtain service type information,
wherein the first obtaining unit is specifically configured to receive a first downlink packet sent by a gateway general packet radio service support node, GGSN, and obtain service type information carried in an Internet Protocol, IP, layer information element of the first downlink packet;
a first writing unit, configured to write the service type information into a BSSGP layer information element or a network service layer information element of a second downlink packet; and
a first sending unit, configured to send the second downlink packet to a base station controller, where the second downlink packet carries the service type information;
wherein the first writing unit is specifically configured to write the service type information into an existing information element of the BSSGP layer of the second downlink packet.

In the embodiments of the present invention, service type information is carried in a base station subsystem GPRS protocol layer information element or a network service layer information element of a downlink packet. A base station controller needs to restore only a base station subsystem GPRS protocol layer information element or a network service layer information element in a received packet to obtain service type information of a terminal. Compared with the prior art, in the embodiments of the present invention, the number of layered processing times of a protocol stack may be reduced when the base station controller obtains the service type information, and therefore, a processing load of the base station controller may be reduced.

### BRIEF DESCRIPTION OF THE DRAWINGS

To describe the technical solutions in the embodiments of the present invention more clearly, the accompanying drawings required for describing the embodiments are briefly introduced in the following. Evidently, the accompanying drawings in the following description are only some embodiments of the present invention, and those of ordinary skill in the art may also derive other drawings according to these drawings without creative efforts.
FIG. 1 is a flowchart of a method for transmitting service type information according to a first embodiment of the present invention;
FIG. 2 is a flowchart of a method for transmitting service type information according to a second embodiment of the present invention;
FIG. 3 is a schematic structural diagram of a serving GPRS support node according to a third embodiment of the present invention;
FIG. 4 is a schematic structural diagram of a gateway GPRS support node according to a fourth embodiment of the present invention; and
FIG. 5 is a schematic structural diagram of a system for transmitting service type information according to a fifth embodiment of the present invention.

### DETAILED DESCRIPTION OF THE EMBODIMENTS

The present invention provides a method for transmitting service type information and a related device for implementing the method. To understand the technical solutions of the present invention better, the embodiments provided in the present invention are described in detail in the following with reference to the accompanying drawings.

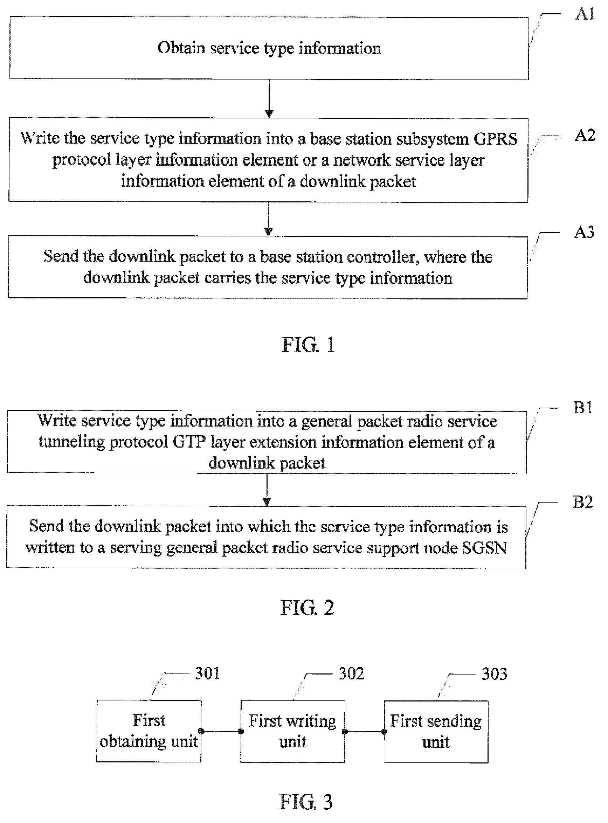

Referring to FIG. 1, FIG. 1 is a flowchart of a method for transmitting service type information according to a first embodiment of the present invention.

A1: Obtain service type information.

Specifically, an SGSN may obtain service type information of a current service of a terminal.

A2: Write the service type information into a base station system GPRS protocol (Base Station System GPRS Protocol, BSSGP) layer information element or a network service layer information element of a downlink packet.

Specifically, after the SGSN obtains the service type information of the terminal, the SGSN may write the service type information into a BSSGP information element or a network service layer information element of a downlink packet that needs to be sent to the terminal.

A3: Send the downlink packet to a base station controller, where the downlink packet carries the service type information.

Specifically, the SGSN sends the downlink packet to the base station controller, where the downlink packet carries the service type information.

In this embodiment of the present invention, service type information is carried in a BSS BSSGP layer information element or a network service layer information element of a downlink packet. A base station controller needs to restore only a BSSGP layer information element or a network service layer information element in a received packet to obtain service type information of a terminal. Compared with the prior art, in this embodiment of the present invention, the number of layered processing times of a protocol stack may be reduced when the base station controller obtains the service type information, and therefore, a processing load of the base station controller may be reduced.

In this embodiment of the present invention, because the base station controller does not need to restore a sub-network dependent convergence protocol layer information element in an LLC layer information element, a case of LLC layer encryption does not affect implementation of this embodiment of the present invention. The method for transmitting service type information according to this embodiment of the present invention may be applied to the case of LLC layer encryption, and may be used widely.

Further, in the first embodiment of the present invention, the SGSN may obtain the service type information of the terminal (step A1) in the following manners:
(1) Receive a downlink packet sent by a GGSN, and obtain service type information carried in an IP layer information element of the downlink packet.
   Specifically, an SGSN receives a downlink packet sent by a GGSN, and service type information of a terminal is carried in a type of service (Type Of Service, TOS) field of an IP layer information element header of the downlink packet. The SGSN obtains the service type information of the terminal according to the downlink packet.
(2) Receive a downlink packet of a terminal, where the downlink packet of the terminal is sent by a GGSN, and obtain service type information carried in a GTP layer extension information element of the downlink packet.
   Specifically, after receiving a downlink packet of a terminal, a GGSN writes service type information of the terminal into an extension information element of a GPRS tunneling protocol (GPRS Tunneling Protocol, GTP) layer information element header of the downlink packet, and then sends the downlink packet to an SGSN, where the downlink packet carries the service type information.
   The SGSN obtains the service type information of the terminal from the extension information element of the GTP layer information element header of the downlink packet.
(3) Receive a service type notification message sent by a GGSN, and obtain service type information carried in the service type notification message.

Specifically, an SGSN receives a service type notification message that is sent by a GGSN through a GTP tunnel, where service type information of a terminal is carried in the service type notification message.

The service type notification message may be a private message, and may also be an existing Gn interface message.

For the private message, in this embodiment of the present invention, a message sent from the GGSN to the SGSN may be defined, and may be defined by simulating an existing Gn interface message format as long as a type of the message does not conflict with that of the existing Gn interface message.

In addition, in this embodiment of the present invention, the existing Gn interface message, such as an update packet data protocol (Packet Data Protocol, PDP) context request (Update PDP Context Request) message, may also be used. When a service type of the terminal changes, the SGSN writes service type information of the terminal into a private extension information element (Private Extension) of the Update PDP Context Request message, and then sends the Update PDP Context Request message into which the service type information is written to the GGSN. After receiving the Gn message, the GGSN returns an update packet data protocol context response (Update PDP Context Response) message to the SGSN, where the response message indicates that the request message has been received.

Being different from manners 1 and 2 in which the service type information is carried in a packet, a manner 3 does not depend on a packet, and therefore, service type information of a terminal may also be sent to a BSC when no data is transmitted on the terminal.

Further, in the method for transmitting service type information according to the first embodiment of the present invention, an exestuation process that the SGSN writes service type information into an information element of a downlink data block of a BSSGP packet of the terminal (step A2) may include the following manners:
(1) Write service type information into an existing information element of a BSSGP layer of a downlink packet.
   Specifically, after receiving a downlink packet, where the downlink packet is sent to a terminal by a server, the SGSN may write obtained service type information into an existing information element of the downlink packet, for example, the SGSN writes the service type information into a peak bit rate (Peak bit rate) field of a quality of service profile (Quality Of Service Profile, QoS Profile) information element of a BSSGP layer of the downlink packet. The SGSN may overwrite the service type information in a low byte of the Peak bit rate (16 bits) field.
   In addition, the SGSN may also write the service type information into another information element (for example, an alignment octet (Alignment octets) information element) of the BSSGP layer of the downlink packet, and a specific writing position of the service type information is not intended to limit the embodiment of the present invention.
(2) Add a service type information element to a BSSGP layer of a downlink packet of a terminal, and write service type information into the service type information element.

Specifically, the SGSN receives a downlink packet, where the downlink packet is sent to a terminal by a server, adds a service type information element to a BSSGP layer of the downlink packet, and writes service type information of the terminal into the service type information element. In this embodiment of the present invention, when parsing a BSSGP layer information element, a receiver of a downlink packet encounters an unknown service type information element, skips the information element, and continues to parse next content, and therefore, a newly added service type information element cannot cause a protocol compatibility problem.

The SGSN may add an optional service type (Traffic Info) information element after a subscriber profile ID for RAT/frequency priority (Subscriber Profile ID for RAT/Frequency Priority) information element of a downlink data block of the BSSGP layer, and write the service type information of the terminal into the Traffic Info information element. It should be noted that the SGSN may also add a service type information element in another position, and its specific position is not intended to limit the embodiment of the present invention.

Further, in the method for transmitting service type information according to this embodiment of the present invention, an execution process that an SGSN writes service type information into a network service layer information element of a downlink packet (step B2) may be implemented in the following manners:
The SGSN adds a service type information element to a network service layer of a downlink packet, and writes the service type information into the service type information element.
The SGSN may add an optional Traffic Info information element after a base station subsystem GPRS protocol virtual connection identifier (BSS GPRS Protocol Virtual Connection Identifier, BVCI) information element of a downlink data block of a network service layer of a downlink packet, and write service type information of a terminal into the Traffic Info information element. It should be noted that the SGSN may also add a service type information element in another position, and its specific position is not intended to limit the embodiment of the present invention.
The method for transmitting service type information according to this embodiment of the present invention is described in the foregoing from the perspective of an SGSN, and the method for transmitting service type information according to this embodiment of the present invention is described in the following from the perspective of a GGSN.

Referring to FIG.2, FIG. 2 is a flowchart of a method for transmitting service type information according to a second embodiment of the present invention.

The method for transmitting service type information according to the second embodiment of the present invention mainly includes:
B 1: Write service type information into a general packet radio service tunneling protocol GTP layer extension information element of a downlink packet.
   Specifically, after receiving a downlink packet, a GGSN writes service type information into an extension information element of a GPRS tunneling protocol (GPRS Tunneling Protocol, GTP) layer information element of the downlink packet.
B2: Send the downlink packet into which the service type information is written to a serving general packet radio service support node SGSN.

Specifically, the GGSN sends the downlink packet into which the service type information is written to the SGSN. The SGSN may obtain service type information of a terminal according to a received downlink packet, and send the service type information of the terminal to a base station controller. The method for transmitting service type information according to the second embodiment of the present invention may provide support for the method for transmitting service type information in the first embodiment.

The method for transmitting service type information according to the embodiments of the present invention is described in detail in the foregoing. An embodiment of the present invention further provides a related device for implementing the method for transmitting service type information.

FIG 3 is a schematic structural diagram of a serving GPRS support node according to a third embodiment of the present invention.

The serving GPRS support node according to this embodiment of the present invention mainly includes:
a first obtaining unit 301, configured to obtain service type information;
a first writing unit 302, configured to write the service type information into a BSSGP layer information element or a network service layer information element of a downlink packet; and
a first sending unit 303, configured to send the downlink packet to a base station controller, where the downlink packet carries the service type information.

The base station controller according to this embodiment of the present invention may be used in the foregoing corresponding method for transmitting service type information in the first embodiment. In this embodiment of the present invention, service type information is carried in a BSSGP layer information element or a network service layer information element of a downlink packet. A base station controller needs to restore only a BSSGP layer information element or a network service layer information element in a received packet to obtain service type information of a terminal. Compared with the prior art, in this embodiment of the present invention, the number of layered processing times of a protocol stack may be reduced when the base station controller obtains the service type information, and therefore, a processing load of the base station controller may be reduced.

In the SGSN according to this embodiment of the present invention, the first obtaining unit 301 obtains service type information of a terminal, which specifically includes:
the first obtaining unit 301 receives a downlink packet of the terminal, where the downlink packet of the terminal is sent by a GGSN, and obtains service type information carried in an IP layer information element of the downlink packet; or
the first obtaining unit 301 receives a service type notification message sent by a GGSN, and obtains service type information carried in the service type notification message; or
the first obtaining unit 301 receives a downlink packet of the terminal, where the downlink packet of the terminal is sent by a GGSN, and obtains service type information carried in a GTP layer extension information element of the packet.

Further, the first writing unit 302 in this embodiment of the present invention is specifically configured to write the service type information into an existing information element of the BSSGP layer of the downlink packet; or add a service type information element to the BSSGP layer of the downlink packet, and write the service type information into the service type information element.

The first writing unit 302 writes the service type information into the existing information element of the BSSGP layer of the downlink packet, which includes: writing the service type information into a quality of service profile information element of the BSSGP layer of the downlink packet; or writing the service type information into an alignment octet information element of the BSSGP layer of the downlink packet. For example, the service type information is written into a peak bit rate (Peak bit rate) field of the quality of service profile (Quality Of Service Profile, QoS Profile) information element of the BSSGP layer of the downlink packet.

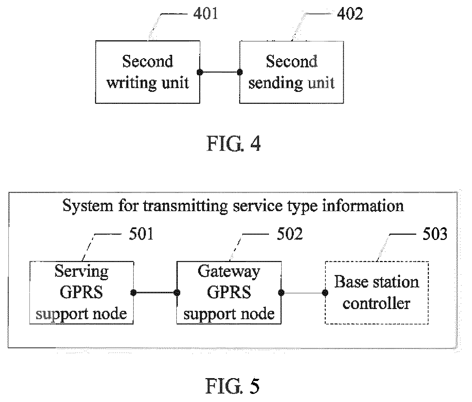

FIG. 4 is a schematic structural diagram of a gateway general packet radio service support node GGSN according to a fourth embodiment of the present invention.

The gateway GPRS support node according to the fourth embodiment of the present invention mainly includes:
a second writing unit 401, configured to write service type information into a GTP layer extension information element of a downlink packet; and
a second sending unit 402, configured to send the downlink packet into which the service type information is written to an SGSN.

The gateway GPRS support node according to the fourth embodiment of the present invention may be used in the foregoing corresponding method for transmitting service type information in the second embodiment, which is not repeated herein.

FIG. 5 is a schematic structural diagram of a system for transmitting service type information according to a fifth embodiment of the present invention.

The system for transmitting service type information in this embodiment of the present invention includes an SGSN 501 and a GGSN 502.

For a specific structure of the SGSN 501, reference may be made to the third embodiment, and for a specific structure of the GGSN 502, reference may be made to the fourth embodiment.

In the system for transmitting service type information according to this embodiment of the present invention, in this embodiment of the present invention, service type information is carried in a BSSGP layer information element or a network service layer information element of a downlink packet. A base station controller needs to restore only a BSSGP layer information element or a network service layer information element in a received packet to obtain service type information of a terminal. Compared with the prior art, in this embodiment of the present invention, the number of layered processing times of a protocol stack may be reduced when the base station controller obtains the service type information, and therefore, a processing load of the base station controller may be reduced.

Further, the system for transmitting service type information according to this embodiment of the present invention further includes a base station controller 503. The base station controller 503 receives a downlink packet sent by the SGSN 501, and obtains service type information of a terminal according to the downlink packet, that is, obtains service type information carried in a BSSGP layer information element or a network service layer information element in a received packet.

It should be noted that, because content, such as information interaction between units in the foregoing apparatus and execution processes of the units, and the method embodiments of the present invention are based on the same concept, and for specific content, reference may be made to the description in the method embodiments of the present invention, which is not repeated herein.

Through the description of the foregoing embodiments, those skilled in the art may clearly understand that the present invention may be implemented by hardware, and may also be implemented by software and a necessary general hardware platform. Based on this understanding, the technical solutions of the present invention may be embodied in the form of a software product. The software product may be stored in a non-volatile storage medium (may be a read-only CD-ROM, a USB disk, a removable hard disk, and so on), including several instructions used to enable a computer device (may be a personal computer, a receiver, or a network device, and so on) to execute the method described in each embodiment of the present invention.

The method, system, and related device for transmitting service type information in the present invention are described in detail in the foregoing. Those of ordinary skill in the art may make variations to specific implementation manners and application scope according to the embodiments of the present invention. Therefore, content of this specification should not be construed as a limitation on the present invention.

## Claims

1. A method for transmitting service type information, comprising:
obtaining (A1), by a serving general packet radio service support node, SGSN, service type information;
wherein the obtaining service type information comprises:
receiving a first downlink packet sent by a gateway general packet radio service support node, GGSN, and obtaining service type information carried in an Internet Protocol, IP, layer information element of the first downlink packet;
writing (A2); by the SGSN, the service type information into a base station subsystem general packet radio service protocol, BSSGP, layer information element or a network service layer information element of a second downlink packet; and
sending (A3), by the SGSN, the second downlink packet to a base station controller, wherein the second downlink packet carries the service type information;
**characterized in that** the writing the service type information into the BSSGP layer information element of the second downlink packet comprises:
writing the service type information into an existing information element of the BSSGP layer of the second downlink packet.

2. The method for transmitting service type information according to claim 1, wherein the writing the service type information into an existing information element of the BSSGP layer of the second downlink packet comprises:
writing the service type information into a quality of service profile information element of the BSSGP layer of the second downlink packet; or
writing the service type information into an alignment octet information element of the BSSGP layer of the second downlink packet.

3. The method for transmitting service type information according to claim 1, wherein the writing the service type information into the network service layer information element of the second downlink packet comprises:
adding a service type information element to the network service layer of the second downlink packet, and writing the service type information into the service type information element.

4. A serving general packet radio service support node, SGSN, comprising:
a first obtaining unit (301), configured to obtain service type information,
wherein the first obtaining unit (301) is specifically configured to receive a first downlink packet sent by a gateway general packet radio service support node, GGSN, and obtain service type information carried in an Internet Protocol, IP, layer information element of the first downlink packet;
a first writing unit (302), configured to write the service type information into a base station subsystem general packet radio service protocol, BSSGP, layer information element or a network service layer information element of a second downlink packet; and
a first sending unit (303), configured to send the second downlink packet to a base station controller, wherein the second downlink packet carries the service type information,
**characterized in that** the first writing unit is specifically configured to write the service type information into an existing information element of the BSSGP layer of the second downlink packet.

## Patentansprüche

1. Verfahren zum Übertragen von Diensttypinformationen, umfassend:
Erhalten (A1) von Diensttypinformationen durch einen "Serving General Packet Radio Service Support Node" SGSN;
wobei das Erhalten von Diensttypinformationen Folgendes umfasst:
Empfangen eines ersten Abwärtsstreckenpakets, das durch einen "Gateway General Packet Radio Service Support Node" GGSN gesendet wird, und Erhalten von Diensttypinformationen, die in einem Internetprotokoll- bzw. IP-Schichtinformationselement des ersten Abwärtsstreckenpakets geführt werden;
Schreiben (A2) der Diensttypinfomationen durch den SGSN in ein "Base Station Subsystem General Packet Radio Service Protocol"- bzw. BSSGP-Schichtinformationselement oder ein Netzdienstschicht-Informationselement eines zweiten Abwärtsstreckenpakets; und
Senden (A3) des zweiten Abwärtsstreckenpakets durch den SGSN zu einer Basisstationssteuerung, wobei das zweite Abwärtsstreckenpaket die Diensttypinformationen führt;
**dadurch gekennzeichnet, dass** das Schreiben der Diensttypinformationen in das BSSGP-Schichtinformationselement des zweiten Abwärtsstreckenpakets Folgendes umfasst:
Schreiben der Diensttypinformationen in ein existierendes Informationselement der BSSGP-Schicht des zweiten Abwärtsstreckenpakets.

2. Verfahren zum Übertragen von Diensttypinformationen nach Anspruch 1, wobei das Schreiben der Diensttypinformationen in ein existierendes Informationselement der BSSGP-Schicht des zweiten Abwärtsstreckenpakets Folgendes umfasst:
Schreiben der Diensttypinformationen in ein Dienstgüteprofil-Informationsement der BSSGP-Schicht des zweiten Abwärtsstreckenpakets; oder
Schreiben der Diensttypinformationen in ein Ausrichtungsoktett-Informationselement der BSSGP-Schicht des zweiten Abwärtsstreckenpakets.

3. Verfahren zum Übertragen von Diensttypinformationen nach Anspruch 1, wobei das Schreiben der Diensttypinformationen in das Netzdienstschicht-Infonnationselement des zweiten Abwärtsstreckenpakets Folgendes umfasst:
Hinzufügen eines Diensttyp-Informationselements zu der Netzdienstschicht des zweiten Abwärtsstreckenpakets und Schreiben der Diensttypinformationen in das Diensttyp-Infomtationselement.

4. "Serving General Packet Radio Service Support Node" SGSN, umfassend:
eine erste Erhalteeinheit (301), ausgelegt zum Erhalten von Diensttypinformationen, wobei die erste Erhalteeinheit (301) spezifisch ausgelegt ist zum Empfangen eines ersten Abwärtsstreckenpakets, das durch einen "Gateway General Packet Radio Service Support Node" GGSN gesendet wird, und Erhalten von Diensttypinformationen, die in einem Internetprotokoll- bzw. IP-Schichtinformationselement des ersten Abwärtsstreckenpakets geführt werden;
eine erste Schreibeinheit (302), ausgelegt zum Schreiben der Diensttypinformationen in ein "Base Station Subsystem General Packet Radio Service Protocol"- bzw. BSSGP-Schichtinformationselement oder ein Netzdienstschicht-Informationselement eines zweiten Abwärtsstreckenpakets; und
eine erste Sendeeinheit (303), ausgelegt zum Senden des zweiten Abwärtsstreckenpakets zu einer Basisstationssteuerung, wobei das zweite Abwärtsstreckenpaket die Diensttypinformationen führt;
**dadurch gekennzeichnet, dass** die erste Schreibeinheit spezifisch ausgelegt ist zum Schreiben der Diensttypinformationen in ein existierendes Informationselement der BSSGP-Schicht des zweiten Abwärtsstreckenpakets.

## Revendications

1. Procédé de transmission d'informations de type de service, comprenant l'étape suivante :
obtenir (A1), par un noeud de support du service général de radiocommunication en mode paquet de desserte, SGSN, des informations de type de service ;
où l'obtention des informations de type de service comprend les étapes suivantes :
recevoir un premier paquet de liaison descendante envoyé par un noeud de support du service général de radiocommunication en mode paquet de passerelle, GGSN, et obtenir des informations de type de service acheminées dans un élément d'informations de couche de protocole Internet, IP, du premier paquet de liaison descendante ;
écrire (A2), par le SGSN, les informations de type de service dans un élément d'informations de couche de protocole de service général de radiocommunication en mode paquet de sous-système de station de base, BSSGP, ou dans un élément d'informations de couche de service de réseau d'un second paquet de liaison descendante ; et
envoyer (A3), par le SGSN, le second paquet de liaison descendante à un contrôleur de station de base, où le second paquet de liaison descendante achemine les informations de type de service ;
**caractérisé en ce que** l'écriture des informations de type de service dans l'élément d'informations de couche BSSGP du second paquet de liaison descendante comprend l'étape suivante :
écrire les informations de type de service dans un élément d'informations existant de la couche BSSGP du second paquet de liaison descendante.

2. Procédé de transmission d'informations de type de service selon la revendication 1, dans lequel l'écriture des informations de type de service dans un élément d'informations existant de la couche BSSGP du second paquet de liaison descendante comprend l'étape suivante :
écrire les informations de type de service dans un élément d'informations de profil de qualité de service de la couche BSSGP du second paquet de liaison descendante ; ou
écrire les informations de type de service dans un élément d'informations d'octet d'alignement de la couche BSSGP du second paquet de liaison descendante.

3. Procédé de transmission d'informations de type de service selon la revendication 1, dans lequel l'écriture des informations de type de service dans l'élément d'informations de couche de service de réseau du second paquet de liaison descendante comprend les étapes suivantes :
ajouter un élément d'informations de type de service à la couche de service de réseau du second paquet de liaison descendante, et écrire les informations de type de service dans l'élément d'informations de type de service.

4. Noeud de support du service général de radiocommunication en mode paquet de desserte, SGSN, comprenant :
une première unité d'obtention (301), configurée pour obtenir des informations de type de service,
où la première unité d'obtention (301) est spécifiquement configurée pour recevoir un premier paquet de liaison descendante envoyé par un noeud de support du service général de radiocommunication en mode paquet de passerelle, GGSN, et obtenir des informations de type de service acheminées dans un élément d'informations de couche de protocole Internet, IP, du premier paquet de liaison descendante ;
une première unité d'écriture (302), configurée pour écrire les informations de type de service dans un élément d'informations de couche de protocole de service général de radiocommunication en mode paquet de sous-système de station de base, BSSGP, ou dans un élément d'informations de couche de service de réseau d'un second paquet de liaison descendante ; et
une première unité d'envoi (303), configurée pour envoyer le second paquet de liaison descendante à un contrôleur de station de base, où le second paquet de liaison descendante achemine les informations de type de service ;
**caractérisé en ce que** la première unité d'écriture est spécifiquement configurée pour écrire les informations de type de service dans un élément d'informations existant de la couche BSSGP du second paquet de liaison descendante.
